# EUROPÄISCHE PATENTSCHRIFT

(11) **EP 4 211 379 B1**
(45) Veröffentlichungstag und Bekanntmachung des Hinweises auf die Patenterteilung: **20.05.2026**
(21) Anmeldenummer: 21772662.9
(22) Anmeldetag: 06.09.2021
(51) Int. Cl.: F16L 5/00, E04G 15/06, F16L 5/10, F16L 5/02, F16L 5/14, E04B 1/66

(54) **ROHRDURCHFÜHRUNG DURCH EIN BAUWERKS-TRENNELEMENT**
PIPE FEEDTHROUGH THROUGH A CONSTRUCTION SEPARATING ELEMENT
TRAVERSÉE DE TUYAU À TRAVERS UN ÉLÉMENT DE SÉPARATION DE CONSTRUCTION

(30) Priorität: 08.09.2020 AT 507592020
(43) Veröffentlichungstag der Anmeldung: 19.07.2023
(73) Patentinhaber: Trautner, Stefan, 4162 Julbach (AT)
(72) Erfinder: Trautner, Stefan, 4162 Julbach (AT)
(74) Vertreter: Wildhack & Jellinek Patentanwälte GmbH
(86) Internationale Anmeldenummer: PCT/AT2021/060314
(87) Internationale Veröffentlichungsnummer: WO 2022/051789

(56) Entgegenhaltungen:
- EP-A1- 2 273 170
- DE-A1- 102005 030 470
- DE-A1- 3 231 932
- DE-C1- 4 427 603

## Beschreibung

Um die langfristige Funktionstauglichkeit von Bauwerken, unabhängig davon, ob es sich um Wohngebäude, Sozialeinrichtungen, Industrieobjekte o.ä. handelt, aufrechterhalten zu können, ist eine schützende Gebäudehülle erforderlich. Besondere Aufmerksamkeit ist einer fluiddichten, insbesondere luft-, gas- und wasserdichten, Bauwerksabdichtung, insbesondere an Bauuntergrunds-, insbesondere erdberührten Bauteilen, im Allgemeinen auch als "Keller" bezeichnet, zu widmen. Neben der flächigen Bauwerksabdichtung, also der beispielsweise feuchtefesten Beschichtung an den Außenwänden und der Fundamentplatte, existieren punktuelle Durchführungen durch die Bauwerksabdichtung, wie zum Beispiel Rohrleitungen, nahezu bei jedem Projekt. Über diese Rohrleitungen wird zum Beispiel das "Abwasser" eines Hauses aus dem Keller herausgeführt und mündet danach in ein Kanalsystem. Solche Durchdringungen durch die Bauwerksabdichtung stellen naturgemäß Schwachstellen dar und sind auch in der Praxis sehr fehleranfällig.

Um ein Rohr, insbesondere Abwasser-Kanalrohr, beispielsweise durch eine Kelleraußenwand oder eine Gebäude-Fundamentplatte führen zu können, ist es erforderlich, ein zusätzliches Rohrleitungsstück, insbesondere einen Rohrstutzen, welcher einen Dichtungs- bzw. Anschlussflansch für die Bauwerksabdichtung aufweisen muss, einzubauen. Die tatsächlich wasser- und feuchtedichte Integration des Anschlussflansches mit der Bauwerksabdichtung ist besonders wichtig.

Das Abwasser-Kanalrohr wird in bzw. durch diesen Rohrstutzen geschoben und mittels sogenannter Ringraumdichtung wird eine wasserdichte Verbindung zwischen Rohrstutzen und Abwasser-Kanalrohr hergestellt. An dieser Schnittstelle zwischen Bauwerksabdichter und Installateur kommt es häufig zu Fehlleistungen, welche letztlich zu Feuchteschäden an einem Gebäude führen.

Gleich an dieser Stelle ist zu betonen, dass wie eben erörterte Durchführungen durch Bauwerks-Trennelemente keineswegs nur als Wasser/Abwasserleitungen ausgeführt sein müssen. Durch derartige Rohrstutzen - selbstverständlich gesichert durch geeignete Dichtelemente zur Rohrstutzen-Innenwandung hin, beispielsweise auf Basis Polopas - können durchaus auch Elektro-, Daten-, Klimamediums- und Gasleitungen verlegt sein.

Immer wieder zu beobachten ist, dass insbesondere aus wirtschaftlichen Gründen ein wie vorhin beschriebener Rohrstutzen nicht eingebaut wird und ein direkter Abdichtungsanschluss an den Außenumfang des Abwasser-Kanalrohrs erfolgt. Die Praxis hat gezeigt, dass hierbei die Schadensanfälligkeit besonders hoch ist.

Aus der EP 2273170 A1 ist eine Schalungseinlage für Mauerdurchführungen bekannt, mit mindestens einem Rohr, welches ein erstes und ein zweites Ende aufweist, wobei es an seinem ersten Ende und an seinem zweiten Ende durch je eine Verschlussplatte verschlossen ist, welche mindestens in einem Befestigungsbereich einen größeren Durchmesser ausweist, als das Rohr an seinem ersten Ende und an seinem zweiten Ende.

In der CH 522091 ist ein Abwasser-Ablaufstutzen für den wasserdichten Einbau in Grundplatten, Wände und Decken aus Dichtbeton beschrieben, welcher mit einer im Beton eingegossenen, radial nach außen gerichteten Dichtungsmanschette ausgestattet ist.

Aus der EP 3361132 A1 ist eine Rohrdurchführung durch eine Bauwerksdecke oder Kellerwand bekannt geworden mit einem Rohrstutzen, welcher eine an der Bauteilsaußenfläche flächig anzulegenden Flansch aufweist.

In der EP 1462706 A1 ist ein Futterrohr zur Rohrdurchführung mit mehreren Dichtlamellen und an die beiden Außenflächen eines Bauteils anliegenden Flanschplatten beschrieben.

Aus der DE 4427603 C1 ist ein Bau-Trennelement für den Innen- und Außenbereich bekannt, das zumindest auf einer Seite mit einer vollflächigen Beschichtung aus einem Dichtmaterial versehen ist und das eine das Trennelement voll quer durchdringende Rohrdurchführung für Leitungen aufweist. Das Trennelement weist weiters eine vom Material des Trennelements umgebene Dicht- und Stabilisierungslamelle und einen Dichtungsflansch auf, der in die Gefährdungsfläche des Trennelements integriert ist.

Aus der DE 3231932 A1 ist eine Rohrmuffe für ein Dachgully bekannt. Die Rohrmuffe weist einen mit der oberen Fläche des Dachs bündig ausgebildeten Flansch auf, der als Doppelflansch-Einheit ausgebildet ist.

Aus der DE 102005030470 A1 ist ein Montagerahmen zur Verwendung bei einem Wanddurchbruch bekannt, der ein Rohr zum Einsetzen in den Wanddurchbruch sowie einen am einen Ende des Rohres befestigten Ringflansch aufweist. Der Umfang des einen Endbereiches des Rohres trägt ein Dichtmaterial und der Endbereich ist vom Ringflansch umschlossen.

Aus der EP 2273170 A1 ist eine Schalungseinlage für eine Mauerdurchführung bekannt, die ein Rohr aufweist, dessen beide Enden durch eine Verschlussplatte verschlossen sind. Das Rohr der Schalungseinlage kann mit Verbindungselementen ausgestaltet sein, beispielsweise mit einer Steckmuffe und einem Käfig.

Bekannt geworden ist weiters eine Wanddurchführung durch Betonwände, bei welcher eine Anbindung einer Bitumendickbeschichtung auf der gefährdeten Seite eines Bauelements dadurch erreicht wird, dass der zur Außenseite hin gerichtete Dichtungsflansch eines einzubetonierenden Durchgangsrohres durch mechanische Fixierung des Bitumenmaterials der Beschichtung erreicht wird, indem die Außenfläche des Dichtungsflansches mir einer Rauung oder aber mit einem Gewebe versehen ist, wodurch eine rein mechanische Bindung der Bitumenbeschichtung erzielt wird. Der Dichtungsflansch kann weiters mit mehreren Nuten mit Hinterschneidung, konkret mit Schwalbenschwanz-Querschnitt versehen sein, um eine mechanische Verkrallung der Bauwerksbeschichtung mit dem Flansch zu erreichen.

Gegenstand der vorliegenden Erfindung ist nun ein Bau-, insbesondere Bauwerks-Trennelement, gemäß Patentanspruch 9 für den Innen- und Außenbereich aus der Gruppe Mauer, Wand, Decke, Feuchtraum- oder Keller-Decke, Fundamentplatte oder Teilbereich derselben, insbesondere auf Basis Beton, das zumindest auf einer Seite mit einer vollflächigen Beschichtung aus einem gegen das Durchdringen von Fluidmedien wie Feuchte, Wasser, Gase und Luft resistenten Dichtmaterial versehen ist, mit zumindest einer in dasselbe integrierter, das Trennelement voll quer durchdringender Rohrdurchführung für Leitungen, wie Elektro-, Daten-, Klimamediums- und Gasleitungen, insbesondere für Wasser und Abwasser, in welches Trennelement zumindest ein, dasselbe quer voll durchdringendes erfindungsgemäßes Rohrleitungsteilstück eingebettet bzw. integriert ist,
wobei die Stabilisierungslamelle vom Material, insbesondere Beton, des Trennelements umbettet ist, und
wobei der Dichtungsflansch in der gefährdeten Gefährdungsfläche eingebettet bzw. integriert ist, wobei erfindungsgemäß vorgesehen ist,
   - dass das Rohrleitungsteilstück mit dem Dichtungsflansch an seiner Rohranschlussmuffe ausgestattet ist,
   - dass - unter Bildung einer Doppelflansch-Einheit - der Dichtungsflansch über seine Außenfläche mit einem denselben allseitig, und bevorzugt gleichmäßig, seitlich überragenden Beschichtungs-Anschlussflansch aus einem mit dem Beschichtungs-Dichtmaterial identischen oder hochkompatiblen Material, vorzugsweise Bitumen, gegebenenfalls klebungsverstärkt, vollflächig verbunden ist,
   - dass die Doppelflansch-Einheit passgenau in einer ihrer geometrischen Gestalt entsprechend geformten Vertiefung bzw. Ausnehmung in der Gefährdungsfläche des Trennelements sitzt,
wobei die Außenfläche des Beschichtungs-Anschlussflansches der Doppelflansch-Einheit mit der Gefährdungsfläche des Trennelements, vorzugsweise exakt, fluchtet, und
   - dass die auf der Gefährdungsfläche aufgebrachte Dichtungsbeschichtung fugen- bzw. nahtlos, vorzugsweise stufenlos und niveaugleich, und unter vollflächiger Materialbindung an die Außenfläche des Beschichtungs-Anschlussflansches, an den mit ihr materialidenten Anschlussflansch materialintegral anschließt und mit demselben eine Einheit bildet.

Unter Einsatz von zwei im erfindungsgemäßen Bauteil eingesetzten erfindungsgemäßen Rohrleitungsteilstücken bzw. Rohrstutzen ist mit nur geringen Anpassungen das Bau-, insbesondere Bauwerks-Trennelement gemäß Anspruch 10 ausgebildet, welches dadurch gekennzeichnet ist,
- dass es für die Durchführung von in normiertem Abstand voneinander geführte Rohre aufweisenden Zwillings-Rohrleitungen mit dem erfindungsgemäßen Zwillings-Rohrleitungssteilstück mit zwei zueinander parallel und im Abstand voneinander angeordneten Rohrstutzen, jedoch mit dem gemeinsamen, materialeinheitlichen, im wesentlichen brillenartigen Zwillings-Dichtungsflansch an deren beiden Rohranschlussmuffen ausgestattet ist,
- dass die Stabilisierungslamelle vom Material, insbesondere Beton, des Trennelements umbettet ist,
- dass - unter Bildung einer Zwillings-Doppelflansch-Einheit - der Zwillings-Dichtungsflansch über seine Außenfläche mit einem ebenfalls etwa brillenartigen, denselben allseitig, und gegebenenfalls gleichmäßig, seitlich überragenden Zwillings-Beschichtungs-Anschlussflansch aus einem mit dem Beschichtungs-Dichtmaterial identischen oder hochkompatiblen Material, vorzugsweise Bitumen, gegebenenfalls klebungsverstärkt, vollflächig verbunden ist,
- dass die Zwillings-Doppelflansch-Einheit passgenau in einer ihrer geometrischen Gestalt entsprechend geformten Vertiefung bzw. Ausnehmung in der Gefährdungsfläche des Trennelements sitzt,
wobei die Außenfläche des Zwillings-Beschichtungs-Anschlussflansches der Zwillings-Doppelflansch-Einheit mit der Gefährdungsfläche des Trennelements, vorzugsweise exakt, fluchtet, und
- dass die auf der Gefährdungsfläche aufgebrachte Dichtungsbeschichtung fugen- bzw. nahtlos, vorzugsweise stufenlos und höhen- bzw. niveaugleich, und unter vollflächiger Materialbindung an die Außenfläche des Zwillings-Beschichtungs-Anschlussflansches, und somit an den mit ihr materialidenten Zwillings-Beschichtungs-Anschlussflansch materialintegral anschließt und mit demselben eine Einheit bildet.

Mit der Erfindung ist ein Trennelement des Bauwesens geschaffen, das trotz des Einsatzes von an sich äußerst unterschiedlichen Komponenten, wie Durchführungsrohr aus Kunststoff und Trennelement aus einem mineralischen Baustoff, insbesondere Beton oder Dichtbeton, und trotz unterschiedlicher Lageausrichtung bzw. Positionierung derselben, wie beispielsweise vertikal und horizontal oder umgekehrt, praktisch zur Einteiligkeit verbunden ist.

Durch den Einsatz des neuen, quasi einteiligen Bau-Trennelements kann insbesondere in Gebäuden eine Art von "Schotten"-Konstruktion, also eine "schottenweise" Abdichtung einzelner Baubereiche wie Stockwerke und Räume erreicht werden, wie insbesondere aus dem Schiffsbau bekannt.

Wesentlicher Bestandteil der Erfindung ist ein in seiner Länge der Keller- oder Feuchtraumwand- oder -decken- oder Fundamentplattenstärke angepasster Rohrstutzen inklusive Rohrmuffe. Am äußeren Rand der Rohrmuffe für eine Rohrsteckverbindung mit einem weiteren Rohr befindet sich in einer Ausnehmung des Bauwerks-Trennteils ein Dichtungsflansch. Mit diesem Flansch ist oberseitig der denselben allseitig überragende Beschichtungs-Anschlussflansch vollflächig verbunden. Zusammen mit demselben bildet der Dichtungsflansch die Doppelflansch-Einheit, deren Beschichtungs-Anschlussflansch-Außenfläche mit der Gefährdungsfläche des Bau-Trennelements fluchtet. Auf diese Außenfläche ist - unter Freihaltung der Öffnung der Rohrmuffe - materialintegral die fluidmediums-, insbesondere feuchtedichte Beschichtung der Gefährdungsfläche des Bau-Trennelements aufgetragen.

Das Material des Beschichtungs-Anschlussflansches ist vorteilhafterweise das gleiche wie jenes der Gefährdungsflächen-Dichtungsbeschichtung.

In einem nächsten Arbeitsschritt braucht der Installateur keller-innenseitig beispielsweise nur ein Abwasser-Kanalrohr an den Rohrstutzen anschließen und keller-außenseitig in die Rohrmuffe ein weiteres Abwasser-Kanalrohr einschieben.

Mit diesen Arbeitsschritten ist die hochgesichert wasserdichte Integration von, insbesondere Abwasser-Kanalrohren, in die Bauwerksabdichtung, also insbesondere in das Bauwerks-Trennelement, abgeschlossen.

Vorteil dieses innovativen Abwasser-Kanalrohrs inklusive Rohrmuffe und Anschlussflansch ist, dass ein zusätzlicher Rohrstutzen inklusive der Ringraumdichtung entfällt, wodurch mögliche Schwachstellen der Rohrdurchführung wesentlich reduziert werden.

Einen wesentlichen Bestandteil des erfindungsgemäßen Bau-Trennelements bildet die fluidmediumsdichte Rohrdurchführung durch denselben selbst, also das erfindungsgemäße Rohrleitungsteilstück, insbesondere Rohrstutzen, für den Einbau zumindest einer Leitungs-, insbesondere Wasser- oder Abwasserleitungsdurchführung in bzw. durch ein Bau-, insbesondere Bauwerks-Trennelement, wie oben näher beschrieben, welches mit einer auf seiner Gefährdungsfläche vollflächig aufgetragenen Dichtmaterial-Beschichtung versehen ist,
welches Rohrleitungsteilstück einstückig aus einem Kunststoffmaterial gefertigt und mit eine zur Gefährdungsfläche hin gerichteten Rohrmuffe mit Ringraumdichtungsnut für einen wasser- und feuchtedichten Anschluss eines weiterführenden Leitungsrohres, und mit mindestens einer zur Rohrstutzenachse quer sich nach außen erstreckenden Stabilisierungslamelle und an die Gefährdungsfläche anliegendem ringartigem, insbesondere kreisringförmigem, Dichtungsflansch ausgebildet ist,
wobei - unter Ausbildung einer Doppelflansch-Einheit - der Dichtungsflansch über seine Außenfläche mit einem denselben umfangsmäßig allseitig seitlich überragenden, ebenfalls ringartigen, insbesondere kreisringförmigen, flachen Beschichtungs-Anschlussflansch, insbesondere klebungsverstärkt, vollflächig verbunden ist, wobei die Doppelflansch-Einheit in eine gemäß deren geometrischer Gestalt geformten Ausnehmung in der Gefährdungsfläche des Bauwerks-Trennteils passgenau einsetzbar ist.

Ein für den Einsatz im Bau- insbesondere Bauwerks-Trennelement gemäß Anspruch 10 vorgesehenes gegenüber dem soeben beschriebenen Einzelrohrstutzen leicht variiertes erfindungsgemäßes Zwillings-Rohrleitungsteilstück gemäß Anspruch 2 mit zwei zueinander parallelen, voneinander beabstandeten Rohrstutzen für den Einbau von zwei Leitungs-, beispielsweise Wasser- oder Abwasser- und Kabelleitungsdurchführungen in bzw. durch ein Bau-, insbesondere Bauwerks-Trennelement, insbesondere aus Beton, welches mit einer auf seiner Gefährdungsfläche vollflächig aufgetragenen Dichtmaterial-Beschichtung versehen ist, welches Zwillings-Rohrleitungsteilstück einstückig aus einem Kunststoffmaterial gefertigt ist, wobei die Rohrstutzen jeweils mit einer zur Gefährdungsfläche hin gerichteten Rohrmuffe mit Ringraumdichtungsnut für einen fluidmediums-, insbesondere wasser- und feuchtedichten Anschluss zweier weiterführender (Ab)Leitungsrohre, und mindestens einer zur Rohrstutzenachse quer sich nach außen erstreckenden Stabilisierungslamelle und an die Gefährdungsfläche anliegendem, im Wesentlichen brillenartigem, vorzugsweise ovalem gemeinsamen materialidenten Zwillings-Dichtungsflansch ausgebildet ist, dadurch gekennzeichnet,
- dass es für die Durchführung von in normiertem Abstand voneinander geführte Rohre aufweisenden Zwillings-Rohrleitungen mit dem erfindungsgemäßen Zwillings-Rohrleitungssteilstück mit zwei zueinander parallel und im Abstand voneinander angeordneten Rohrstutzen, jedoch mit dem gemeinsamen, materialeinheitlichen, im wesentlichen brillenartigen Zwillings-Dichtungsflansch an deren beiden Rohranschlussmuffen ausgestattet ist,
- dass die Stabilisierungslamelle vom Material, insbesondere Beton, des Trennelements umbettet ist,
- dass - unter Bildung einer Zwillings-Doppelflansch-Einheit - der Zwillings-Dichtungsflansch über seine Außenfläche mit einem ebenfalls etwa brillenartigen, denselben allseitig, und gegebenenfalls gleichmäßig, seitlich überragenden Zwillings-Beschichtungs-Anschlussflansch aus einem mit dem Beschichtungs-Dichtmaterial identischen oder hochkompatiblen Material, vorzugsweise Bitumen, gegebenenfalls klebungsverstärkt, vollflächig verbunden ist,
- dass die Zwillings-Doppelflansch-Einheit passgenau in einer ihrer geometrischen Gestalt entsprechend geformten Vertiefung bzw. Ausnehmung in der Gefährdungsfläche des Trennelements sitzt,
wobei die Außenfläche des Zwillings-Beschichtungs-Anschlussflansches der Zwillings-Doppelflansch-Einheit mit der Gefährdungsfläche des Trennelements, vorzugsweise exakt, fluchtet, und
- dass die auf der Gefährdungsfläche aufgebrachte Dichtungsbeschichtung fugen- bzw. nahtlos, vorzugsweise stufenlos und höhen- bzw. niveaugleich, und unter vollflächiger Materialbindung an die Außenfläche des Zwillings-Beschichtungs-Anschlussflansches, und somit an den mit ihr materialidenten Zwillings-Beschichtungs-Anschlussflansch materialintegral anschließt und mit demselben eine Einheit bildet.

Der ganz wesentliche Unterschied zwischen erfindungsgemäß eingesetztem bzw. erfindungsgemäßem Rohrstutzen und jenem eingangs erwähnten, bekannt gewordenen Rohrteils besteht darin, dass dort versucht wird, eine Bindung zwischen Dichtungsflansch und Beschichtungsmaterial auf rein mechanischem Wege zu erreichen, also dadurch dass die Bindungsfläche des Dichtungsflansches durch Aufrauhung von dessen Außenfläche durch Aufbringung eines Gewebes auf dieselbe oder durch Einarbeitung von Nuten mit Hinterschneidungen verändert wird.

Erfindungsgemäß wird hingegen eine besonders hohe derartige Bindung durch die chemische Materialidentität zwischen allseitig überstehendem Beschichtungs-Anschlussflansch der Doppelflansch-Einheit und Beschichtungsmasse erzielt.

Für eine praktisch zeitlich unbegrenzte Dichthaltung der neuartigen Rohrdurchführung ist es besonders günstig, wenn das in das Bau-, insbesondere Bauwerks-Trennelement betonein- und -umgossene Rohrleitungsstück oder Zwillings-Rohrleitungsstück aus einem gegen das Material des Trennelements, insbesondere Beton, einerseits und gegen das Beschichtungs-Dichtmaterial und das Material des Beschichtungs-Anschlussflansches oder Zwillings-Beschichtungs-Anschlussflansches andererseits resistenten, hitzebeständigen, schlagfesten, bevorzugt mit Armierungsmaterial gefüllten, Kunststoffmaterial gefertigt ist.

Insbesondere für einen ordnungsgemäß lagerichtigen Einsatz der Doppelflansch-Einheit unter der luft-, gas-, wasser- und feuchteangriffsdichten, vollflächigen Beschichtung des Trennelements, also der Gefährdungsfläche des Gebäude-Trennelements ist es wichtig, ein Rohrleitungsteilstück einzubauen, dessen Beschichtungs-Anschlussflansch, bevorzugt jedoch die Doppelflansch-Einheit kreisringförmig mit zumindest zwei oder zweimal zwei einander jeweils gegenüberliegenden, insbesondere gradlinigen, segmentartigen Flachabschnitten im Außenumfangsverlauf ausgebildet ist.

Im Falle eines erfindungsgemäßen Zwillings-Rohrleitungsteilstücks ist vorgesehen,
- dass - unter Bildung einer Zwillings-Doppelflansch-Einheit - mit dem Zwillings-Dichtungsflansch über dessen Ober- bzw. Außenfläche
- ein denselben umfangsmäßig allseitig seitlich überragender, im Wesentlichen brillenartiger, vorzugsweise ovaler, flacher Zwillings-Beschichtungs-Anschlussflansch, insbesondere klebungsverstärkt, vollflächig verbunden ist,
- wobei die Zwillings-Doppelflansch-Einheit in eine gemäß deren geometrischer Gestalt geformten Ausnehmung in der Gefährdungsfläche des Bau-Trennteils einsetzbar ist und
- wobei die Stabilisierungslamellen jedes der beiden Rohrstutzen im Abstand voneinander positioniert sind.

Insbesondere für den dichten Anschluss des jeweiligen Beschichtungs-Anschlussflansches an die Rohrmuffe/n ist es von Vorteil, wenn sich das Rohrleitungsteilstück oder das Zwillings-Rohrleitungsteilstück dadurch auszeichnet, dass die Rohranschlussmuffe/n mit einem über das Niveau des Dichtungsflansches oder Zwillings-Dichtungsflansches, vorzugsweise in einer der Dicke bzw. Höhe des vollflächig mit ihm verbundenen Beschichtungs-Anschlussflansches oder Zwillings-Beschichtungs-Anschlussflansches entsprechenden bzw. gleichen Höhe ragenden Randring ausgebildet ist oder sind, an dessen Außenwand vollumfänglich mit seiner Innenwand der Beschichtungs-Anschlussflansch oder der Zwillings-Beschichtungs-Anschlussflansch gebunden ist.

Sowohl für einen sicheren Halt im es satt umschließenden Gebäude-Trennelement als auch für eine besonders gesicherte Feuchteabwehr ist ein erfindungsgemäßes Rohrleitungsteilstück oder Zwillings-Rohrleitungsteilstück von Vorteil, welches dadurch gekennzeichnet ist, dass die Stabilisierungslamelle(n) flächig unter Ausbildung einer Hinterschneidung in einem Winkel von weniger als 90° zu dessen Achse ausgerichtet ist oder sind.

Im Hinblick auf unkomplizierten Anschluss an ein Zulaufrohrsystem aus dem Gebäudeinneren und ein Ablaufrohrsystem nach außen, z.B. für den Anschluss an ein Kanalsystem, ist ein Rohrleitungsteilstück oder Zwillings-Rohrleitungsteilstück von Vorteil, wenn dessen Rohrstutzen im Wesentlichen eine der Dicke des Bauwerk-Trennelementes, von dessen Material es satt umbettet ist, entsprechende Gesamtlänge aufweist, und es oder dessen Rohrstutzen muffenabseitig rohrende-artig offen mit Abschrägung zu der der Gefährdungsfläche gegenüberliegenden, vorzugsweise zu ihr parallelen, Bauwerks-Trennelementsgegenfläche endend ausgebildet ist oder sind.

Nicht zuletzt sei ein Beschichtungs-Anschlussflansch für die Bildung einer Doppelflansch-Einheit mit dem Dichtungsflansch eines Rohrleitungsteilstücks, insbesondere Rohrstutzens, erwähnt, welcher dadurch gekennzeichnet ist, dass er für einen fugen- bzw. nahtlosen und niveaugleichen materialintegralen, vollflächigen Anschluss an die, insbesondere Materialschluss mit der fluidmediumsresistente Dichtungs-Beschichtung der Gefährdungsfläche eines Bau-, insbesondere Bauwerks-Trennelements einerseits und für eine vollflächige Verbindung mit dem Dichtungsflansch aus einem mit dem Material der Beschichtung identen oder hochkompatiblen Material gefertigt ist und als beidseitig flacher Ring, insbesondere Kreisring, mit kreisförmiger, dem Außenradius des Randringes entsprechenden Öffnungsradius aufweisender Ringöffnung ausgebildet ist.

Anhand der Zeichnung wird im Folgenden die Erfindung näher erläutert:
Es zeigen die Fig. 1 eine Schnittansicht eines erfindungsgemäßen, mit dem neuen Rohrteilstück, also insbesondere Rohrstutzen, ausgestatteten Bauwerks-Trennelements, also beispielsweise einer Kellerwand, die Fig. 2 eine Draufsicht auf die Doppelflansch-Einheit bzw. auf den Beschichtungs-Anschlussflansch des das Bauwerks-Trennelements durchsetzenden Rohrteilstücks, die Fig. 3 die Schnittansicht eines von einem Zwillings-Rohrleitungsteilstück durchdrungenen Bauwerk-Trennelements und die Fig. 4 das Zwillings-Rohrleitungsteilstück selbst.

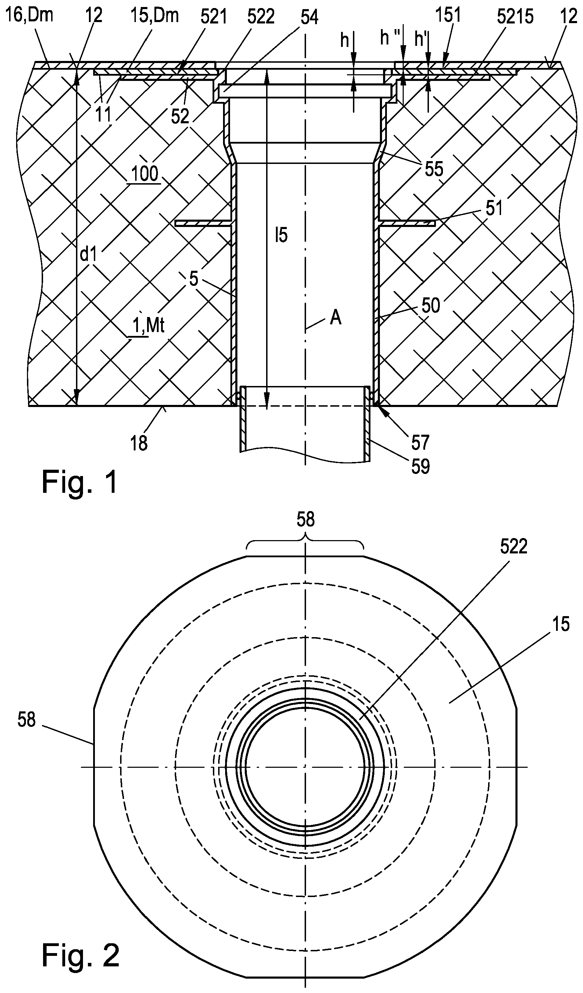

Die Fig. 1 zeigt Folgendes:
Vom Baustoff, also insbesondere Beton, also vom Material Mt, eines Bautrennelements 1, wie beispielsweise eine an das feuchte Erdreich eines Baugrunds flächig angrenzende Außenwand eines Kellers, satt umbettet ist ein die Rohrdurchführung für Wasser oder Abwasser durch dieselbe ermöglichendes, mit einem Rohrstutzen 5 gebildetes Rohrteilstück.

Der Rohrstutzen 5 ist im Wesentlichen mit einem üblichen zylindrischen Rohrstück 50 gebildet, das sich zu der durch Feuchtigkeit oder direkt Wasser, beispielsweise im Erdreich des Baugrunds und deren Eintritt und Durchtritt gefährdeten Gefährdungsfläche 12 des Trennelements 1 - meist beispielsweise eine Außenfläche einer Kellerwand - hin zu einer an sich üblichen Wasser-/Abwasser-Rohrmuffe 55 mit innenliegender Dichtungsnut 54 für einen Dichtungsring für den Anschluss eines üblichen Wasser-/Abwasser-Abführungsrohres, beispielsweise zu einem Abwasserkanal hin, hin erweitert.

Etwa mittig weist der Rohrstutzen 5 eine sich hier senkrecht zur Rohrstutzenachse A in den Beton erstreckende Stabilisierungslamelle 51 auf, welche insbesondere für einen stabilen Halt in der Betonmasse Mt des Bauwerks-Trennteils 1, also z.B. der Außenwand eines Bauwerks, sorgt.

Der Rohrstutzen 5 weist einen Randring 522 mit einer Höhe h auf, welche gleich ist der Dicke h' des Anschlussflansches 15. Die Gesamtlänge I5 des Rohrstutzens 5 ist gleich der Dicke d1 des Bauwerks-Trennelements 1.

Auf der der Gefährdungsoberfläche 12 gegenüberliegenden Fläche 18 des Trennelements 1 endet der Durchführungs-Rohrstutzen 5 offen, wie ein übliches Rohr, und weist dort eine umlaufende Außenabschrägung 57 auf. In dieses offene Rohrende kann problemlos ein Abwasserrohr 59 des Gebäudeinneren dichtend eingeschoben werden, wie in der Fig. 1 angedeutet.

In die jeglichen Feuchtigkeits- bzw. Wassereintritt entlang der Rohrdurchdringung 100 mittels Beschichtung 16 mit der Dicke h" möglichst verhindern sollende Gefährdungsoberfläche 12 der Keller-Außenwand 1 ist eine etwa ringartige Ausnehmung 11 mit einer gestuften Wandung eingesenkt, in welcher der mit dem Rohrstutzen 5 einstückige Dichtungsflansch 52 und der über dessen Außenfläche 521, insbesondere klebungsunterstützt, mit ihm verbundene Beschichtungs-Anschlussflansch 12, welche gemeinsam die Doppelflansch-Einheit 5215 bilden, sitzt - welcher unterseitig und randumfangsmäßig seitlich vom Material Mt des Bauwerks-Trennelementes 1 satt umgossen ist.

Die Außenfläche 151 des Beschichtungs-Anschlussflansches 15 fluchtet mit der Gefährdungsoberfläche 12 des Bauwerks-Trennteils 1 selbst.

An den erhöhten Randring 522 der Rohrmuffe 55 schließt vollumfänglich seitlich der im Wesentlichen ringförmige Beschichtungs-Anschlussflansch 15 fluidmediumsdicht an, der seinerseits unter Ausbildung der Doppelflansch-Einheit 5215 mit dem Dichtungsflansch 52 vollflächig verbunden ist.

Der Beschichtungs-Anschlussflansch 15 überragt, vorzugsweise gleichmäßig, den mit ihm verbundenen einstückig mit der Rohrmuffe 55 verbundenen Dichtungsflansch 52 allseitig radial.

Die Ausnehmung 11 hat eine der geometrischen Gestalt der Doppelflansch-Einheit 5215 passgenau entsprechende Form.

Der Beschichtungs-Anschlussflansch 15 ist aus einem dem Material Dm der Gefährdungsflächenbeschichtung 16 gleichen Material Dm oder höchstens chemisch nahverwandten Material Dm' gefertigt, wodurch ein einen Fluidmediums-, insbesondere Feuchtigkeitsdurchtritt absolut verhindernder, praktisch materialintegraler Fugen- bzw. Nahtlosanschluss von Gefährdungsflächen-Beschichtung 16 und Beschichtungs-Anschlussflansch 15 gewährleistet ist.

Was die konkrete, also reale Fertigung des neuen Bau-Trennelements 1, also z.B. einer Kellerwand, mit Wasser-/Abwasser-Durchführung mittels "Ausgießen" einer den Bauwerks-Trennteil 1 beidseitig begrenzenden Schalung mit fließfähigem und danach erhärtendem Baumaterial, insbesondere Beton, betrifft, so wird das erfindungsgemäße Rohrteilstück 5, also der Rohrstutzen, in die Schalung eingebaut, und zwar so, dass die Beschichtungs-Anschlussflansch-Außenfläche 151 der Doppelflansch-Einheit 5215 an der Schalungswand-Innenseite flächig anliegt und vom in die Schalung eingebrachten fließfähigen Baumaterial Mt nahtlos umgossen wird, das dort erhärtet, wodurch letztlich nach dem Ausschalen die Doppelflansch-Einheit 5215 in einer ihrer Gesamtgestalt voll entsprechenden Ausnehmung 11 des Bautrennelements 1 angeordnet ist. Danach erfolgt die Aufbringung des Gefährdungsflächen 16 -Beschichtungsmaterials Dm integral sowohl auf die Gefährdungsfläche 12 als auch auf die freiliegende Außenfläche des Beschichtungs-Anschlussflansches 15 der Doppelflansch-Einheit 5215, insbesondere auf Basis Bitumen, durch Aufspritzen oder Aufstreichen.

Die Fig. 2 zeigt in Sicht von oben einen im Wesentlichen kreisringförmigen Beschichtungs-Anschlussflansch 15 der Doppelflansch-Einheit 5215 mit seinen zweimal zwei einander gegenüber angeordneten Flachstrecken 58 im Randverlauf und der kreisrunden Öffnung mit einem Radius r15, welcher passgenau dem Außenradius des Randrings 522 der Rohrmuffe 55 entspricht.

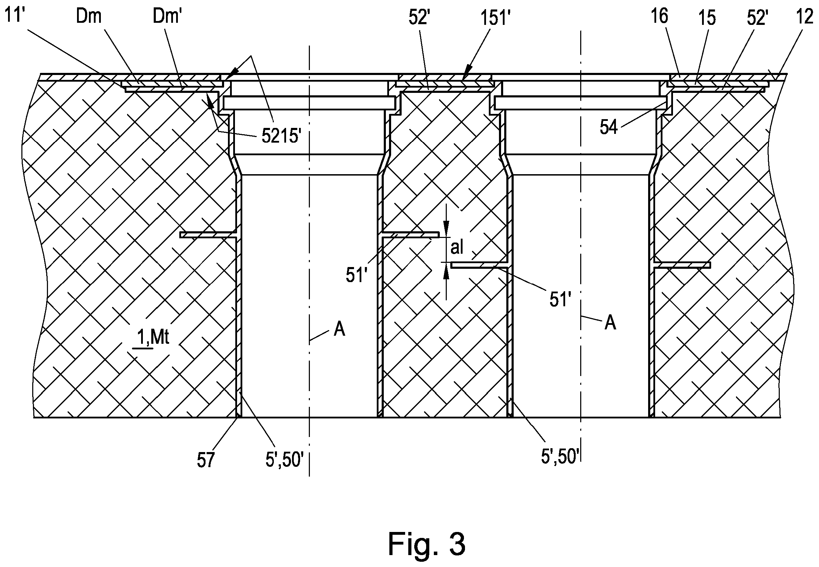

Das in Fig. 3 in Schnittansicht - mit sonst gleichbleibenden Bezugszeichenbedeutungen - gezeigte Bauelement 1 ist hier von zwei in normiertem Abstand zueinander angeordneten Rohrstutzen 50' des Zwillings-Rohrleitungsteilstückes 5' durchsetzt, welche einen gemeinsamen, beide Rohrstutzen 50' miteinander verbindenden brillenartigen, etwa die Form einer "8" aufweisenden Zwillings-Dichtungsflansch 52' aufweisen. Über seine Außenfläche 521' ist derselbe mit dem Zwillings-Beschichtungsanschlussflansch 15' vollflächig verbunden, der seinerseits mit insbesondere ovaler Außenform vorliegt und allseitig den Zwillings-Beschichtungsanschlussflansch 15' seitlich überragt.

Zusammen bilden diese beiden Flansche 52', 15' die Zwillings-Doppelflanscheinheit 5215'. Die Stabilisierungslamellen 51' der beiden Rohrstutzen 50' sind im Abstand al voneinander angeordnet, und jeweils vom Beton Mt des Bauelements 1 umschlossen. Die Zwillings-Beschichtungsanschlussflansch 15' sitzt nach Umgießung des Zwillings-Rohrleitungsteilstücks 5' mit Beton in einer seiner Gestalt passgenau entsprechenden Ausnehmung 11' des Bauelements 1.

Über die Außenfläche 151' des Zwillings-Beschichtungsanschlussflansches 15' ist die letztlich aufgetragene Voll-Beschichtung 16 der Gefährdungsfläche 12 mit demselben materialident vollfächig verbunden.

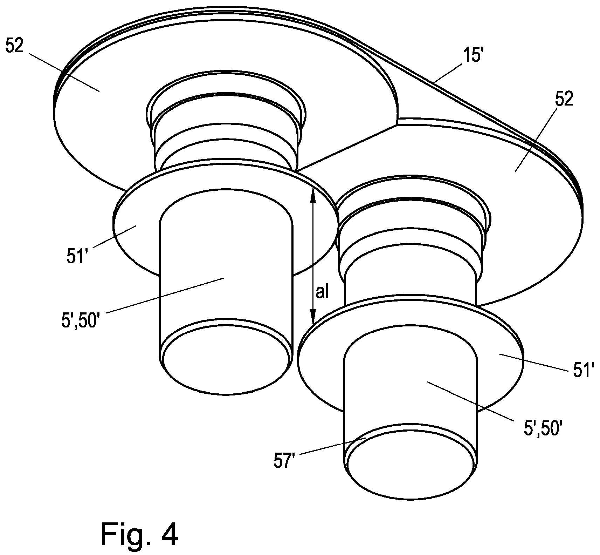

Die in Fig. 4 gezeigte Untersicht der Zwillings-Rohrleitungsteilstücke 5' erläutert - bei mit Fig. 3 gleichbleibenden Bezugszeichenbedeutungen - das Zwillings-Rohrleitungsteilstück 5' näher:
Bei dem hier gezeigten Zwillings-Rohrleitungsteilstück 5' sind - bei sonst gleichbleibenden Bezugszeichenbedeutungen wie gemäß Fig. 3 - die beiden dasselbe bildenden Rohrstutzen 50' erkennbar, wobei in der Fig. 4 deutlich die unterschiedlichen Relativ-Positionierungen der beiden Stabilisierungslamellen 51' zu sehen sind.

Weiters ist dort gezeigt, wie die Dichtungsflansche der beiden Rohrstutzen 50' gemeinsam den etwa die Außenform einer "8" aufweisenden Zwillings-Dichtungsflansch 52' bilden. Über dessen Ober- bzw. Außenfläche 521' ist mit demselben der etwa brillenartig ausgebildete Zwillings-Beschichtungsanschlussflansch 15' vollflächig verbunden, welcher hier mit ovaler Form den Zwillings-Dichtungsflansch 52' allseitig überragt und mit ihn die Zwillings-Doppelflanscheinheit 5215' bildet.

## Patentansprüche

1. Rohrleitungsteilstück (5), insbesondere Rohrstutzen, für den Einbau zumindest einer Leitungs- insbesondere Wasser- oder Abwasserleitungsdurchführung in bzw. durch ein Bau-, insbesondere Bauwerks-Trennelement (1), insbesondere aus Beton, welches mit einer auf seiner Gefährdungsfläche (12) vollflächig aufgetragenen Dichtmaterial-Beschichtung (16) versehen ist,
welches einstückig aus einem Kunststoffmaterial gefertigt und mit einer zur Gefährdungsfläche (12) hin gerichteten Rohrmuffe (55) mit Ringraumdichtungsnut (54) für einen fluidmediums-, insbesondere wasser- und feuchtedichten Anschluss eines weiterführenden (Ab)Leitungsrohres, und mindestens einer zur Rohrstutzenachse (A) quer sich nach außen erstreckenden Stabilisierungslamelle (51) und an die Gefährdungsfläche (12) anliegendem ringartigem, insbesondere kreisringförmigem, Dichtungsflansch (52) ausgebildet ist,
- wobei - unter Bildung einer Doppelflansch-Einheit (5215) - mit dem Dichtungsflansch (52) über dessen Oberfläche (521)
- ein denselben umfangsmäßig allseitig seitlich überragender, ebenfalls ringartiger, insbesondere kreisringförmiger, flacher Beschichtungs-Anschlussflansch (15), insbesondere klebungsverstärkt, vollflächig verbunden ist,
- wobei die Doppelflansch-Einheit (5215) in eine gemäß deren geometrischer Gestalt geformten Ausnehmung (11) in der Gefährdungsfläche (12) des Bau-Trennteils (1) einsetzbar ist.

2. Zwillings-Rohrleitungsteilstück (5') mit zwei zueinander parallelen voneinander beabstandeten Rohrstutzen, für den Einbau von zwei Leitungs- insbesondere Wasser- oder Abwasserleitungsdurchführungen in bzw. durch ein Bau-, insbesondere Bauwerks-Trennelement (1), insbesondere aus Beton, welches mit einer auf seiner Gefährdungsfläche (12) vollflächig aufgetragenen Dichtmaterial-Beschichtung (16) versehen ist,
welches einstückig aus einem Kunststoffmaterial gefertigt ist, wobei die Rohrstutzen jeweils mit einer zur Gefährdungsfläche (12) hin gerichteten Rohrmuffe (55) mit Ringraumdichtungsnut (54) für einen fluidmediums-, insbesondere wasser- und feuchtedichten Anschluss zweier weiterführender (Ab)Leitungsrohre, und mindestens einer zur Rohrstutzenachse (A) quer sich nach außen erstreckenden Stabilisierungslamelle (51') und an die Gefährdungsfläche (12) anliegendem, im Wesentlichen brillenartigem, vorzugsweise ovalem gemeinsamen materialidenten Dichtungsflansch (52') ausgebildet ist,
- wobei - unter Bildung einer Zwillings-Doppelflansch-Einheit (5215') - mit dem Zwillings-Dichtungsflansch (52') über dessen Oberfläche (521')
- ein denselben umfangsmäßig allseitig seitlich überragender, ebenfalls im Wesentlichen brillenartiger, vorzugsweise ovaler, flacher Zwillings-Beschichtungs-Anschlussflansch (15'), insbesondere klebungsverstärkt, vollflächig verbunden ist,
- wobei die Zwillings-Doppelflansch-Einheit (5215') in eine gemäß deren geometrischer Gestalt geformten Ausnehmung (11) in der Gefährdungsfläche (12) des Bau-Trennteils (1) einsetzbar ist und
- wobei die Stabilisierungslamellen (51') jeden der beiden Rohrstutzen (50') im Abstand (al) voneinander positioniert sind.

3. Rohrleitungsteilstück (5) oder Zwillings-Rohrleitungsteilstück (5') nach einem der Ansprüche 1 oder 2, **dadurch gekennzeichnet, dass** es aus einem gegen das Material des Bau-Trennelements (Mt), insbesondere Beton, einerseits und gegen das Beschichtungs-Dichtmaterial (Dm) und das Material (Dm') des Beschichtungs-Anschlussflansches (15, 152) andererseits resistentem, hitzebeständigem, schlagfestem, bevorzugt mit Armierungsmaterial gefüllten, Kunststoffmaterial gefertigt ist.

4. Rohrleitungsteilstück (5) nach einem der vorangehenden Ansprüche, **dadurch gekennzeichnet, dass** zumindest der Beschichtungs-Anschlussflansch (52), bevorzugt jedoch die Doppelflansch-Einheit (5215), ringförmig, insbesondere kreisringförmig, mit zumindest zwei oder zweimal zwei einander jeweils gegenüberliegenden, insbesondere gradlinigen, segmentartigen Flachabschnitten (58) im Außenumfangsverlauf ausgebildet ist.

5. Zwillings-Rohrleitungsteilstück (5') nach einem der vorangehenden Ansprüche, **dadurch gekennzeichnet, dass** zumindest der Zwillings-Beschichtungs-Anschlussflansch (52'), bevorzugt jedoch die Zwillings-Doppelflansch-Einheit (5215'), im wesentlichen brillenartig in Form einer 8 ausgebildet ist.

6. Rohrleitungsteilstück (5) oder Zwillings-Rohrleitungsteilstück (5') nach einem der vorangehenden Ansprüche, **dadurch gekennzeichnet, dass** die Rohranschlussmuffen (55, 55') mit einem über das Niveau des (Zwillings-)Dichtungsflansches (52, 52'), vorzugsweise in einer der Dicke bzw. Höhe (h') des vollflächig an ihn gebundenen Zwillings-Beschichtungs-Anschlussflansches (15, 15') entsprechenden bzw. gleichen Höhe (h) ragenden Randring (522) ausgebildet ist, mit dessen Außenwand vollumfänglich mit seiner Innenwand der Zwillings-Beschichtungs-Anschlussflansch (15, 15') verbunden ist.

7. Rohrleitungsteilstück (5) oder Zwillings-Rohrleitungsteilstück (5') nach einem der vorangehenden Ansprüche, **dadurch gekennzeichnet, dass** dessen Stabilisierungslamelle(n) (51, 51') flächig unter Ausbildung einer Hinterschneidung in einem Winkel von weniger als 90° zu deren Achse (A) des/der Rohrstutzen (5, 5') ausgerichtet ist (sind).

8. Rohrleitungsteilstück (5) oder Zwillings-Rohrleitungsteilstück (5') mit Rohrmuffe (55, 55') nach einem der vorangehenden Ansprüche, **dadurch gekennzeichnet,**
- **dass** es im Wesentlichen eine der Dicke (d1) des Bau-Trennelementes (1) von dessen Material (Mt), es satt umbettet ist, entsprechende Gesamtlänge (I5) aufweist, und
- **dass** es oder dessen Rohrstutzen (5, 5') muffenabseitig rohrende-artig offen mit einer Abschrägung (57, 57') zu der der Gefährdungsfläche (51) gegenüberliegenden, vorzugsweise zu ihr parallelen, Bauwerks-Trennelementsgegenfläche (18) endend ausgebildet ist oder sind.

9. Bau-, insbesondere Bauwerks-Trennelement (1) für den Innen- und Außenbereich aus der Gruppe Mauer, Wand, Decke, Feuchtraum- oder Keller-Decke, Fundamentplatte oder Teilbereich derselben, insbesondere auf Basis Beton, das zumindest auf einer Seite mit einer vollflächigen Beschichtung (16) aus einem gegen das Ein- und Durchdringen von Fluidmedien, wie Feuchte, Wasser, Gase und Luft resistenten Dichtmaterial (Dm) versehen ist, mit zumindest einer in dasselbe integrierter, das Trennelement (1) voll quer durchdringender Rohrdurchführung für Leitungen wie Elektro-, Daten-, Klimamediums- und Gasleitungen, insbesondere für Wasser und Abwasser, in welches Trennelement (1) zumindest ein, dasselbe quer voll durchdringendes Rohrleitungsteilstück (5) gemäß Anspruch 1 eingebettet bzw. integriert ist,
wobei die Stabilisierungslamelle (51) vom Material, insbesondere Beton, des Trennelements (1) umbettet ist, und
wobei der Dichtungsflansch (52) in der gefährdeten Gefährdungsfläche (12) eingebettet bzw. integriert ist,
**dadurch gekennzeichnet,**
- **dass** das Rohrleitungsteilstück (5) als mit dem Dichtungsflansch (52) an seiner Rohranschlussmuffe (55) ausgestatteter Rohrstutzen (50) ausgebildet ist,
- **dass** - unter Bildung einer Doppelflansch-Einheit (5215) - der Dichtungsflansch (52) über seine Außenfläche (521) mit einem denselben allseitig, und bevorzugt gleichmäßig, seitlich überragenden Beschichtungs-Anschlussflansch (15) aus einem mit dem Beschichtungs-Dichtmaterial (Dm) identischen oder hochkompatiblen Material (Dm'), vorzugsweise Bitumen, insbesondere klebungsverstärkt, vollflächig verbunden ist,
- **dass** die Doppelflansch-Einheit (5215) passgenau in einer ihrer geometrischen Gestalt entsprechend geformten Vertiefung bzw. Ausnehmung (11) in der Gefährdungsfläche (12) des Trennelements (1) sitzt,
wobei die Außenfläche (151) des Beschichtungs-Anschlussflansches (15) der Doppelflansch-Einheit (5215) mit der Gefährdungsfläche (12) des Trennelements (1), vorzugsweise exakt, fluchtet, und
- **dass** die auf der Gefährdungsfläche (12) aufgebrachte Dichtungsbeschichtung (16) fugen- bzw. nahtlos, vorzugsweise stufenlos und höhen- bzw. niveaugleich, und unter vollflächiger Materialbindung an der Außenfläche (151) des Beschichtungs-Anschlussflansches (15), an den mit ihr materialidenten Beschichtungs-Anschlussflansch (15) materialintegral anschließt und mit demselben eine Einheit bildet.

10. Bau- insbesondere Bauwerks-Trennelement (1) für den Innen- und Außenbereich aus der Gruppe Mauer, Wand, Decke, Feuchtraum- oder Keller-Decke, Fundamentplatte oder Teilbereich derselben, insbesondere auf Basis Beton, das zumindest auf einer Seite mit einer vollflächigen Beschichtung (16) aus einem gegen das Ein- und Durchdringen von Fluidmedien, wie Feuchte, Wasser, Gase und Luft resistenten Dichtmaterial (Dm) versehen ist, mit zumindest einer in dasselbe integrierter, das Trennelement (1) voll quer durchdringender Rohrdurchführung für Leitungen wie Elektro-, Daten-, Klimamediums- und Gasleitungen, insbesondere für Wasser und Abwasser, in welches Trennelement (1) zumindest ein, dasselbe quer voll durchdringendes Zwillings-Rohrleitungsteilstück (5') gemäß Anspruch 2,
**dadurch gekennzeichnet,**
- **dass** es für die Durchführung von in normiertem Abstand (ar) voneinander geführte Rohre aufweisenden Zwillings-Rohrleitungen mit dem Zwillings-Rohrleitungssteilstück (5') gemäß Anspruch 2 mit zwei zueinander parallel und im Abstand voneinander angeordneten Rohrstutzen (50') mit dem gemeinsamen materialeinheitlichen, im wesentlichen brillenartigen Zwillings-Dichtungsflansch (52') an deren beiden Rohranschlussmuffen (55') ausgestattet ist,
- **dass** die Stabilisierungslamelle (51') vom Material, insbesondere Beton, des Trennelements (1) umbettet ist,
- **dass** - unter Bildung einer Zwillings-Doppelflansch-Einheit (5215') - der Zwillings-Dichtungsflansch (52') über seine Außenfläche (521') mit einem denselben allseitig, und bevorzugt gleichmäßig, seitlich überragenden Zwillings-Beschichtungs-Anschlussflansch (15') aus einem mit dem Beschichtungs-Dichtmaterial (Dm) identischen oder hochkompatiblen Material (Dm'), vorzugsweise Bitumen, insbesondere klebungsverstärkt, vollflächig verbunden ist,
- **dass** die Zwillings-Doppelflansch-Einheit (5215') passgenau in einer ihrer geometrischen Gestalt entsprechend geformten Vertiefung bzw. Ausnehmung (11') in der Gefährdungsfläche (12) des Trennelements (1) sitzt,
wobei die Außenfläche (151') des Zwillings-Beschichtungs-Anschlussflansches (15') der Zwillings-Doppelflansch-Einheit (5215') mit der Gefährdungsfläche (12) des Trennelements (1), vorzugsweise exakt, fluchtet, und
- **dass** die auf der Gefährdungsfläche (12) aufgebrachte Dichtungsbeschichtung (16) fugen- bzw. nahtlos, vorzugsweise stufenlos und höhen- bzw. niveaugleich, und unter vollflächiger Materialbindung an der Außenfläche (151') des Zwillings-Beschichtungs-Anschlussflansches (15'), an den mit ihr materialidenten Zwillings-Beschichtungs-Anschlussflansch (15') materialintegral anschließt und mit demselben eine Einheit bildet.

## Claims

1. Conduit part (5), in particular a pipe sleeve, for the installation of at least one conduit penetration, in particular for water or waste water, into or through a structural separating element (1), in particular made of concrete, which is provided on its hazard surface (12) with a full-surface sealing material coating (16), which is manufactured in one piece from plastic and is formed with a pipe sleeve (55) oriented towards the hazard surface (12) with an annular gap sealing groove (54) for a fluid-tight connection, in particular water- and moisture-tight, of a continuous conduit pipe (Ab), and at least one stabilizing fin (51) extending transversely outwards from the pipe sleeve axis (A) and an annular sealing flange (52), in particular in the form of a circular ring, applied against the hazard surface (12),
- wherein - forming a double flange unit (5215) - with the sealing flange (52) on its surface (521),
- a flat, also annular, in particular circular ring-shaped, coating connection flange (15), laterally protruding all around it, in particular reinforced by bonding, is connected over its entire surface,
- the double flange unit (5215) being insertable into a recess (11) formed in the hazard surface (12) of the structural separating element (1) according to its geometrical shape.

2. Double conduit part (5') with two parallel and spaced-apart pipe sleeves, for the installation of two conduit penetrations, in particular for water or waste water, into or through a structural separating element (1), in particular made of concrete, which is provided on its hazard surface (12) with a full-surface sealing material coating (16), which is manufactured in one piece from plastic, the pipe sleeves each being formed with a pipe sleeve (55) oriented towards the hazard surface (12) with an annular gap sealing groove (54) for a fluid-tight connection, in particular water- and moisture-tight, of two continuous conduit pipes (Ab), and at least one stabilizing fin (51') extending transversely outwards from the pipe sleeve axis (A) and a common, single-material, essentially spectacle-shaped, preferably oval, double sealing flange (52') applied against the hazard surface (12),
- wherein - forming a double-double flange unit (5215') - with the double sealing flange (52') on its surface (521'),
- a flat, also essentially spectacle-shaped, preferably oval, double coating connection flange (15'), laterally protruding all around it, in particular reinforced by bonding, is connected over its entire surface,
- the double-double flange unit (5215') being insertable into a recess (11) formed in the hazard surface (12) of the structural separating element (1) according to its geometrical shape, and
- the stabilizing fins (51') of each of the two pipe sleeves (50') being positioned at a distance (a1) from each other.

3. Conduit part (5) or double conduit part (5') according to one of claims 1 or 2, **characterized in that** it is made of a resistant plastic material that is resistant on the one hand to the material of the structural separating element (Mt), in particular concrete, and on the other hand to the sealing material of the coating (Dm) and the material (Dm') of the coating connection flange (15, 152), heat-resistant, impact-resistant, preferably filled with a reinforcing material.

4. Conduit part (5) according to one of the preceding claims, **characterized in that** at least the coating connection flange (52), but preferably the double flange unit (5215), is annular in shape, in particular in the form of a circular ring, with at least two or two times two segmental, in particular straight, flat sections (58) opposed to each other on the outer periphery.

5. Double conduit part (5') according to one of the preceding claims, **characterized in that** at least the double coating connection flange (52'), but preferably the double-double flange unit (5215'), is essentially spectacle-shaped, in the form of an 8.

6. Conduit part (5) or double conduit part (5') according to one of the preceding claims, **characterized in that** the pipe connection sleeve(s) (55, 55') are formed with an edge ring (522) protruding beyond the level of the (double) sealing flange (52, 52'), preferably with a height (h) corresponding to the thickness or height (h') of the (double) coating connection flange (15, 15') connected to it over its entire surface, or of the same height, whose outer wall is connected over its entire circumference to its inner wall of the (double) coating connection flange (15, 15').

7. Conduit part (5) or double conduit part (5') according to one of the preceding claims, **characterized in that** its stabilizing fin(s) (51, 51') are oriented planar, forming an undercut at an angle of less than 90° to their axis (A) of the pipe sleeve(s) (5, 5').

8. Conduit part (5) or double conduit part (5') with pipe sleeve (55, 55') according to one of the preceding claims, **characterized in that** it has a total length (l5) essentially corresponding to the thickness (d1) of the structural separating element (1) in its material (Mt) which saturates it, and **in that** it or its pipe sleeves (5, 5') are formed open at the pipe end, on the side opposite the sleeve, with a chamfer (57, 57') terminating at the opposite surface (18) of the structural separating element, preferably parallel thereto, opposite the hazard surface (51).

9. Structural separating element (1), in particular for the interior and exterior area, from the group wall, partition, ceiling, wet room or cellar ceiling, foundation slab or part thereof, in particular concrete-based, which is provided at least on one side with a full coating (16) of a sealing material (Dm) resistant to the penetration of fluids such as moisture, water, gases and air, with at least one pipe penetration integrated therein, completely penetrating the separating element (1) transversely, for conduits such as electrical, data, climate fluid and gas conduits, in particular for water and waste water, in which separating element (1) at least one conduit part (5) completely penetrating it transversely is embedded or integrated, according to claim 1, the stabilizing fin (51) being encased by the material, in particular concrete, of the separating element (1), and the sealing flange (52) being embedded or integrated in the hazard surface (12), **characterized in**
- **that** the conduit part (5) is formed as a pipe sleeve (50) equipped with the sealing flange (52) on its pipe connection sleeve (55),
- **that** - forming a double flange unit (5215) - the sealing flange (52) is connected over its entire surface (521) to a coating connection flange (15) laterally protruding from all sides, and preferably uniformly, made of a material (Dm') identical or highly chemically compatible with the sealing material of the coating (Dm), preferably bitumen, in particular reinforced by bonding, over its entire surface,
- **that** the double flange unit (5215) is precisely housed in a recess or indentation (11) formed according to its geometrical shape in the hazard surface (12) of the separating element (1), the outer surface (151) of the coating connection flange (15) of the double flange unit (5215) being aligned, preferably exactly, with the hazard surface (12) of the separating element (1), and
- **that** the sealing coating (16) applied to the hazard surface (12) connects seamlessly or without a seam, preferably without a step and at the same level, and with a complete material bond, to the outer surface (151) of the coating connection flange (15), and thus to the material connection of the coating connection flange (15) which is identical in material to it, and forms a unit with it.

10. Structural separating element (1), in particular for the interior and exterior area, from the group wall, partition, ceiling, wet room or cellar ceiling, foundation slab or part thereof, in particular concrete-based, which is provided at least on one side with a full coating (16) of a sealing material (Dm) resistant to the penetration of fluids such as moisture, water, gases and air, with at least one pipe penetration integrated therein, completely penetrating the separating element (1) transversely, for conduits such as electrical, data, climate fluid and gas conduits, in particular for water and waste water, in which separating element (1) at least one double conduit part (5') completely penetrating it transversely is embedded or integrated, according to claim 2, **characterized in**
- **that** it is equipped for the realization of double conduits having pipes spaced at a standardized distance (ar) from each other with the double conduit part (5') according to claim 2, with two pipe sleeves (50') arranged parallel and at a distance from each other, with the common, single-material, essentially spectacle-shaped double sealing flange (52') on their two pipe connection sleeves (55'),
- **that** the stabilizing fin (51') is encased by the material, in particular concrete, of the separating element (1),
- **that** - forming a double-double flange unit (5215') - the double sealing flange (52') is connected over its entire surface (521') to a double coating connection flange (15') laterally protruding from all sides, and preferably uniformly, made of a material (Dm') identical or highly chemically compatible with the sealing material of the coating (Dm), preferably bitumen, in particular reinforced by bonding, over its entire surface,
- **that** the double-double flange unit (5215') is precisely housed in a recess or indentation (11') formed according to its geometrical shape in the hazard surface (12) of the separating element (1), the outer surface (151') of the double coating connection flange (15') of the double-double flange unit (5215') being aligned, preferably exactly, with the hazard surface (12) of the separating element (1), and
- **that** the sealing coating (16) applied to the hazard surface (12) connects seamlessly or without a seam, preferably without a step and at the same level, and with a complete material bond, to the outer surface (151') of the double coating connection flange (15'), and thus to the material connection of the double coating connection flange (15') which is identical in material to it, and forms a unit with it.

## Revendications

1. Pièce de conduite (5), en particulier manchon de tuyau, pour le montage d'au moins une traversée de conduite, en particulier d'eau ou d'eaux usées, dans ou à travers un élément de séparation de construction (1), en particulier en béton, qui est pourvu sur sa surface de danger (12) d'un revêtement de matériau d'étanchéité (16) appliqué sur toute la surface, laquelle est fabriquée d'un seul tenant en matière plastique et est formée avec un manchon de tuyau (55) orienté vers la surface de danger (12) avec une gorge d'étanchéité pour espace annulaire (54) pour un raccordement étanche aux fluides, en particulier à l'eau et à l'humidité, d'un tuyau de conduite (Ab) continue, et au moins une lamelle de stabilisation (51) s'étendant transversalement vers l'extérieur par rapport à l'axe du manchon de tuyau (A) et une bride d'étanchéité (52) de type annulaire, en particulier en forme d'anneau circulaire, appliquée contre la surface de danger (12),
- où - en formant une unité à double bride (5215) - avec la bride d'étanchéité (52) sur sa surface (521),
- une bride de raccordement de revêtement (15) plate, également de type annulaire, en particulier en forme d'anneau circulaire, la dépassant latéralement sur tout le pourtour, en particulier renforcée par collage, est liée sur toute la surface,
- l'unité à double bride (5215) pouvant être insérée dans un évidement (11) formé dans la surface de danger (12) de l'élément de séparation de construction (1) selon sa forme géométrique.

2. Pièce de conduite double (5') avec deux manchons de tuyau parallèles et espacés l'un de l'autre, pour l'installation de deux traversées de conduites, en particulier d'eau ou d'eaux usées, dans ou à travers un élément de séparation de construction (1), en particulier en béton, qui est pourvu sur sa surface de danger (12) d'un revêtement en matériau d'étanchéité (16) appliqué sur toute la surface, laquelle est fabriquée d'un seul tenant en matière plastique, les manchons de tuyau étant chacun formés avec un manchon de tuyau (55) orienté vers la surface de danger (12) avec une gorge d'étanchéité pour espace annulaire (54) pour un raccordement étanche aux fluides, en particulier à l'eau et à l'humidité, de deux tuyaux de conduite (Ab) continus, et au moins une lamelle de stabilisation (51') s'étendant transversalement vers l'extérieur par rapport à l'axe du manchon de tuyau (A) et une bride d'étanchéité double (52') commune, d'un seul matériau, essentiellement en forme de lunettes, de préférence ovale, appliquée contre la surface de danger (12),
- où - en formant une unité à double bride double (5215') - avec la bride d'étanchéité double (52') sur sa surface (521'),
- une bride de raccordement de revêtement double (15') plate, également essentiellement en forme de lunettes, de préférence ovale, la dépassant latéralement sur tout le pourtour, en particulier renforcée par collage, est liée sur toute la surface,
- l'unité à double bride double (5215') pouvant être insérée dans un évidement (11) formé dans la surface de danger (12) de l'élément de séparation de construction (1) selon sa forme géométrique, et
- les lamelles de stabilisation (51') de chacun des deux manchons de tuyau (50') étant positionnées à distance (a1) l'une de l'autre.

3. Pièce de conduite (5) ou pièce de conduite double (5') selon l'une des revendications 1 ou 2, **caractérisée en ce qu'**elle est fabriquée en une matière plastique résistante d'une part au matériau de l'élément de séparation de construction (Mt), en particulier le béton, et d'autre part au matériau d'étanchéité du revêtement (Dm) et au matériau (Dm') de la bride de raccordement de revêtement (15, 152), résistante à la chaleur, résistante aux chocs, de préférence remplie d'un matériau d'armature.

4. Pièce de conduite (5) selon l'une des revendications précédentes, **caractérisée en ce qu'**au moins la bride de raccordement de revêtement (52), mais de préférence l'unité à double bride (5215), est de forme annulaire, en particulier en forme d'anneau circulaire, avec au moins deux ou deux fois deux sections plates (58) segmentaires, en particulier rectilignes, opposées l'une à l'autre sur le pourtour extérieur.

5. Pièce de conduite double (5') selon l'une des revendications précédentes, **caractérisée en ce qu'**au moins la bride de raccordement de revêtement double (52'), mais de préférence l'unité à double bride double (5215'), est essentiellement en forme de lunettes, en forme de 8.

6. Pièce de conduite (5) ou pièce de conduite double (5') selon l'une des revendications précédentes, **caractérisée en ce que** le ou les manchons de raccordement de tuyau (55, 55') sont formés avec une bague de bord (522) dépassant le niveau de la bride d'étanchéité (double) (52, 52'), de préférence d'une hauteur (h) correspondant à l'épaisseur ou à la hauteur (h') de la bride de raccordement de revêtement (double) (15, 15') qui lui est liée sur toute la surface, ou de même hauteur, dont la paroi extérieure est liée sur toute sa circonférence à sa paroi intérieure de la bride de raccordement de revêtement (double) (15, 15').

7. Pièce de conduite (5) ou pièce de conduite double (5') selon l'une des revendications précédentes, **caractérisée en ce que** sa ou ses lamelles de stabilisation (51, 51') sont orientées de manière plane en formant une contre-dépouille selon un angle inférieur à 90° par rapport à leur axe (A) du ou des manchons de tuyau (5, 5').

8. Pièce de conduite (5) ou pièce de conduite double (5') avec manchon de tuyau (55, 55') selon l'une des revendications précédentes, **caractérisée**
- **en ce qu'**elle présente une longueur totale (l5) correspondant essentiellement à l'épaisseur (d1) de l'élément de séparation de construction (1) en son matériau (Mt) qui l'enrobe à saturation, et
- **en ce qu'**elle ou ses manchons de tuyau (5, 5') sont formés de manière ouverte à l'extrémité du tuyau, du côté opposé au manchon, avec un chanfrein (57, 57') se terminant à la surface opposée (18) de l'élément de séparation de construction, de préférence parallèle à celle-ci, en face de la surface de danger (51).

9. Élément de séparation de construction (1), en particulier pour la zone intérieure et extérieure, du groupe mur, paroi, plafond, plafond de local humide ou de cave, plaque de fondation ou partie de celle-ci, en particulier à base de béton, qui est pourvu au moins sur un côté d'un revêtement complet (16) en un matériau d'étanchéité (Dm) résistant à la pénétration de fluides tels que l'humidité, l'eau, les gaz et l'air, avec au moins une traversée de tuyau intégrée dans celui-ci, pénétrant complètement l'élément de séparation (1) en travers, pour des conduites telles que des conduites électriques, de données, de fluide climatique et de gaz, en particulier pour l'eau et les eaux usées, dans lequel élément de séparation (1) est encastrée ou intégrée au moins une pièce de conduite (5) le traversant complètement en travers, selon la revendication 1, la lamelle de stabilisation (51) étant enrobée par le matériau, en particulier le béton, de l'élément de séparation (1), et la bride d'étanchéité (52) étant encastrée ou intégrée dans la surface de danger (12), **caractérisé**
- **en ce que** la pièce de conduite (5) est formée comme un manchon de tuyau (50) équipé de la bride d'étanchéité (52) sur son manchon de raccordement de tuyau (55),
- **en ce que** - en formant une unité à double bride (5215) - la bride d'étanchéité (52) est liée sur toute sa surface (521) à une bride de raccordement de revêtement (15) la dépassant latéralement de tous côtés, et de préférence de manière uniforme, en un matériau (Dm') identique ou hautement compatible chimiquement avec le matériau d'étanchéité du revêtement (Dm), de préférence du bitume, en particulier renforcé par collage, sur toute la surface,
- **en ce que** l'unité à double bride (5215) est logée avec précision dans un évidement ou un renfoncement (11) formé selon sa forme géométrique dans la surface de danger (12) de l'élément de séparation (1), la surface extérieure (151) de la bride de raccordement de revêtement (15) de l'unité à double bride (5215) étant alignée, de préférence exactement, avec la surface de danger (12) de l'élément de séparation (1), et
- **en ce que** le revêtement d'étanchéité (16) appliqué sur la surface de danger (12) se raccorde sans joint ou couture, de préférence sans marche et au même niveau, et avec une liaison matérielle complète, à la surface extérieure (151) de la bride de raccordement de revêtement (15), et donc au raccordement matériel de la bride de raccordement de revêtement (15) qui lui est identique en matériau, et forme une unité avec celle-ci.

10. Élément de séparation de construction (1), en particulier pour la zone intérieure et extérieure, du groupe mur, paroi, plafond, local humide ou de cave, plaque de fondation ou partie de celle-ci, en particulier à base de béton, qui est pourvu au moins sur un côté d'un revêtement complet (16) en un matériau d'étanchéité (Dm) résistant à la pénétration de fluides tels que l'humidité, l'eau, les gaz et l'air, avec au moins une traversée de tuyau intégrée dans celui-ci, pénétrant complètement l'élément de séparation (1) en travers, pour des conduites telles que des conduites électriques, de données, de fluide climatique et de gaz, en particulier pour l'eau et les eaux usées, dans lequel élément de séparation (1) est encastrée ou intégrée au moins une pièce de conduite double (5') le traversant complètement en travers, selon la revendication 2, **caractérisé**
- **en ce qu'**il est équipé pour la réalisation de conduites doubles présentant des tuyaux espacés à une distance normalisée (ar) les uns des autres avec la pièce de conduite double (5') selon la revendication 2, avec deux manchons de tuyau (50') disposés parallèlement et à distance l'un de l'autre, avec la bride d'étanchéité double (52') commune, d'un seul matériau, essentiellement en forme de lunettes, sur leurs deux manchons de raccordement de tuyau (55'),
- **en ce que** la lamelle de stabilisation (51') est enrobée par le matériau, en particulier le béton, de l'élément de séparation (1),
- **en ce que** - en formant une unité à double bride double (5215') - la bride d'étanchéité double (52') est liée sur toute sa surface (521') à une bride de raccordement de revêtement double (15') la dépassant latéralement de tous côtés, et de préférence de manière uniforme, en un matériau (Dm') identique ou hautement compatible chimiquement avec le matériau d'étanchéité du revêtement (Dm), de préférence du bitume, en particulier renforcé par collage, sur toute la surface, que l'unité à double bride double (5215') est logée avec précision dans un évidement ou un renfoncement (11') formé selon sa forme géométrique dans la surface de danger (12) de l'élément de séparation (1), la surface extérieure (151') de la bride de raccordement de revêtement double (15') de l'unité à double bride double (5215') étant alignée, de préférence exactement, avec la surface de danger (12) de l'élément de séparation (1), et
- **en ce que** le revêtement d'étanchéité (16) appliqué sur la surface de danger (12) se raccorde sans joint ou couture, de préférence sans marche et au même niveau, et avec une liaison matérielle complète, à la surface extérieure (151') de la bride de raccordement de revêtement double (15'), et donc au raccordement matériel de la bride de raccordement de revêtement double (15') qui lui est identique en matériau, et forme une unité avec celle-ci.
